# EUROPEAN PATENT APPLICATION

(11) **EP 4 289 670 A1**
(43) Date of publication of application: **13.12.2023**
(21) Application number: 22749420.0
(22) Date of filing: 12.01.2022
(51) Int. Cl.: B60Q 1/50, F21Y 115/10, F21Y 115/30, F21S 43/00, F21S 43/20, F21S 43/31, F21W 103/60

(54) **ROAD SURFACE RENDERING DEVICE**

(30) Priority: 03.02.2021 JP 2021015771; 03.02.2021 JP 2021015772
(71) Applicant: KOITO MANUFACTURING CO., LTD., Minato-ku, Tokyo, 108-8711 (JP)
(72) Inventor: KITAZAWA Yukiko, Shizuoka-shi, Shizuoka 424-8764 (JP); SASAKI Masaru, Shizuoka-shi, Shizuoka 424-8764 (JP); TANABE Koichi, Shizuoka-shi, Shizuoka 424-8764 (JP); WATANABE Ken, Shizuoka-shi, Shizuoka 424-8764 (JP); KITO Masanori, Shizuoka-shi, Shizuoka 424-8764 (JP)
(74) Representative: Cabinet Beau de Loménie
(86) International application number: PCT/JP2022/000686
(87) International publication number: WO 2022/168543

(57) **Abstract**

This road surface rendering device irradiates an irradiated region (R1) extending along a direction away from the road surface rendering device with light to thereby render a road surface, wherein the illuminance in a center region (R12) is highest when the irradiated region (R1) is divided in three into a left region (R11), a center region (R12), and a right region (R13) in a direction (D2) intersecting a longitudinal direction (D1).

## Description

### TECHNICAL FIELD

The present disclosure relates to a road surface rendering device.

### BACKGROUND ART

In order to present information indicating an operation of a vehicle (for example, information indicating a left turn, a right turn, a backward movement, or the like of the vehicle) to a pedestrian or the like present around the vehicle, it is currently studied in various countries of the world to mount a road surface rendering device for illuminating a road surface around the vehicle with a road surface rendering pattern on the vehicle (for example, see Patent Literature 1).

### CITATION LIST

### PATENT LITERATURE

Patent Literature 1: WO2020/067113

### SUMMARY OF INVENTION

### TECHNICAL PROBLEM

A road surface rendering is often provided below a line of sight of a person, and thus the road surface rendering is likely to be overlooked by a pedestrian or the like. Therefore, there is a need to increase visibility of the road surface rendering.

An object of the present disclosure is to provide a road surface rendering device capable of providing a road surface rendering that can be easily visually recognized.

In a road surface rendering pattern emitted on a road surface, an illuminance of a region far from a host vehicle may be smaller than an illuminance of a region close to the host vehicle. In this case, the region of the road surface rendering pattern far from the host vehicle becomes dark, and as a result, visibility of the road surface rendering pattern may be decreased. In this regard, there is room to improve a related road surface rendering device.

An object of the present disclosure is to provide a road surface rendering device capable of rendering a road surface rendering pattern that can be easily visually recognized.

### SOLUTION TO PROBLEM

A road surface rendering device according to an aspect for achieving the above object is
a road surface rendering device for rendering a road surface by illuminating an illumination region extending along a direction away from the road surface rendering device with light, in which
when the illumination region is divided into three regions of a left region, a central region, and a right region in a direction intersecting a longitudinal direction, an illuminance of the central region is largest.

According to the above configuration, the illuminance of the central region is larger than an illuminance of the left region and an illuminance of the right region, and thus a road surface rendering can be easily noticed by a pedestrian or the like. Therefore, according to the road surface rendering device having the above configuration, a road surface rendering that can be easily visually recognized can be provided.

A road surface rendering device according to an aspect for achieving the above object is
a road surface rendering device for rendering on a road surface by illuminating a rendering region extending along a distance from the road surface rendering device with light, the road surface rendering device including:
a first unit including a first light source, and a first projection lens configured to project light emitted from the first light source onto at least a part of the rendering region;
a second unit including a second light source, and a second projection lens configured to project light emitted from the second light source onto at least a part of the rendering region, in which
the first unit and the second unit are configured to make an illumination range illuminated with light of the first light source to be narrower than an illumination range illuminated with light of the second light source, and
the first unit and the second unit are configured to make a farthest end portion of the illumination range of light from the second light source to overlap a farthest end portion of the illumination range of light from the first light source.

According to the above configuration, the illumination range illuminated with light of the first light source is narrower than the illumination range illuminated with light of the second light source. The farthest end portion of the illumination range of light from the second light source overlaps the farthest end portion of the illumination range of light from the first light source. A road surface rendering pattern in a region far away from the road surface rendering device tends to be dark, but a road surface rendering pattern drawn by the road surface rendering device according to the present disclosure is bright and can be easily visually recognized because light from the first light source and light from the second light source are emitted in a manner of overlapping each other in the vicinity of the farthest end portion.

A road surface rendering device according to an aspect for achieving the above object is
a road surface rendering device for forming a road surface rendering pattern to be rendered on a road surface, the road surface rendering device including:
a first light source unit including a first light source, and a first optical component configured to refract or reflect light emitted from the first light source;
a second light source unit including a second light source, and a second optical component configured to refract or reflect light emitted from the second light source; and
a projection lens configured to project light emitted from the first light source and transmitted through the first optical component and light emitted from the second light source and transmitted through the second optical component in front of the road surface rendering device to form the road surface rendering pattern, in which
a first region illuminated by the first light source unit is positioned farther from the road surface rendering device than a second region illuminated by the second light source unit, and
the first optical component and the second optical component are configured to make an equivalent light emission area when light emitted from the first light source is incident on the projection lens to be smaller than an equivalent light emission area when light emitted from the second light source is incident on the projection lens.

According to the above configuration, the farther first region in which the road surface rendering pattern is likely to be formed to be wider is illuminated with light that is incident on the projection lens and is squeezed with a small equivalent light emission area. Therefore, the road surface rendering device having the above configuration can illuminate the farther first region brightly, which tends to be dark. Therefore, the road surface rendering pattern formed by the road surface rendering device having the above configuration can be easily visually recognized.

A road surface rendering device according to an aspect for achieving the above object is
a road surface rendering device for forming a road surface rendering pattern to be rendered on a road surface, the road surface rendering device including:
a first light source;
a second light source different from the first light source; and
a projection lens configured to project light emitted from the first light source and light emitted from the second light source in front of the road surface rendering device to form the road surface rendering pattern, in which
a first region illuminated by the first light source is positioned farther from the road surface rendering device than a second region illuminated by the second light source, and
a distance between the first light source and the projection lens is shorter than a distance between the second light source and the projection lens.

The first region positioned farther from a host vehicle is more likely to be dark than the nearby second region. Therefore, the distance between the first light source that emits light to the first region and the projection lens is shorter than the distance between the second light source that emits light to the second region and the projection lens. Therefore, according to the road surface rendering device having the above configuration, light incident on the projection lens from the first light source is more than light incident on the projection lens from the second light source, and thus the first region can be illuminated brightly. Therefore, the road surface rendering pattern formed by the road surface rendering device having the above configuration can be easily visually recognized.

### ADVANTAGEOUS EFFECTS OF INVENTION

According to the present disclosure, a road surface rendering device capable of forming a road surface rendering pattern that can be easily visually recognized can be provided.

According to the present disclosure, a road surface rendering device capable of rendering a road surface rendering pattern that can be easily visually recognized can also be provided.

### BRIEF DESCRIPTION OF DRAWINGS

[FIG. 1] FIG. 1 is a plan view of a vehicle provided with a road surface rendering device according to a first embodiment.
[FIG. 2] FIG. 2 is a diagram illustrating the road surface rendering device according to the first embodiment.
[FIG. 3] FIG. 3 is a timing chart diagram illustrating timings for turning a first illumination unit and a second illumination unit on and off.
[FIG. 4] FIG. 4 is a diagram illustrating an illuminance distribution of a road surface rendering pattern according to the first embodiment.
[FIG. 5] FIG. 5 is a diagram illustrating a road surface rendering device according to a modification of the first embodiment.
[FIG. 6] FIG. 6 is a diagram illustrating an illuminance distribution of a road surface rendering pattern according to the modification of the first embodiment.
[FIG. 7] FIG. 7 is a diagram illustrating a road surface rendering device according to a second embodiment.
[FIG. 8] FIG. 8 is a plan view of a vehicle provided with a road surface rendering device according to a third embodiment.
[FIG. 9] FIG. 9 is a cross-sectional view of the road surface rendering device according to the third embodiment.
[FIG. 10] FIG. 10 is a diagram illustrating a case in which light is emitted from the road surface rendering device according to the third embodiment.
[FIG. 11] FIG. 11 is a cross-sectional view of a road surface rendering device according to a fourth embodiment.
[FIG. 12] FIG. 12 is a diagram illustrating light shielding portions provided on the road surface rendering device according to the fourth embodiment.
[FIG. 13] FIG. 13 is a diagram illustrating a case in which light is emitted from the road surface rendering device according to the fourth embodiment.
[FIG. 14] FIG. 14 is a cross-sectional view of a road surface rendering device according to a fifth embodiment.
[FIG. 15] FIG. 15 is a diagram illustrating a case in which light is emitted from a road surface rendering device according to each of the fifth embodiment and a sixth embodiment.
[FIG. 16] FIG. 16 is a cross-sectional view of the road surface rendering device according to the sixth embodiment.
[FIG. 17] FIG. 17 is a cross-sectional view of a road surface rendering device according to a modification of the sixth embodiment.

### DESCRIPTION OF EMBODIMENTS

In the following, an embodiment of the present disclosure (hereinafter, referred to as the present embodiment) will be described with reference to the drawings. For convenience of description, dimensions of members illustrated in the drawings may differ from actual dimensions of the members.

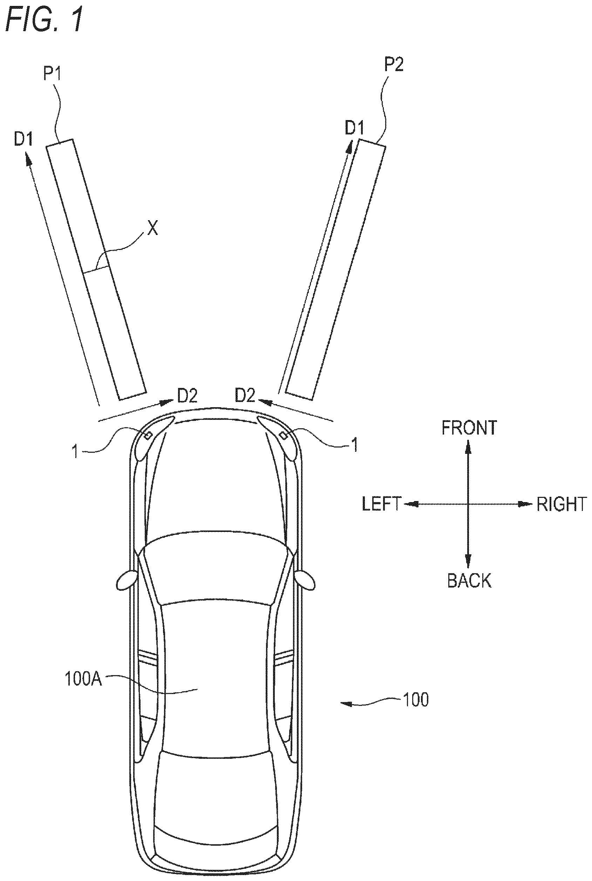

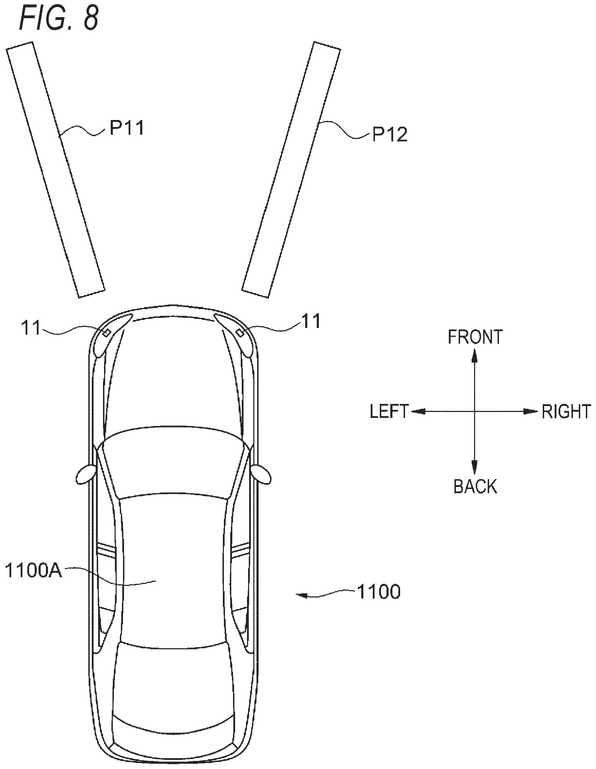

In the description of the present embodiment, for convenience of description, a "left and right direction", an "up and down direction", and a "front and rear direction" may be appropriately referred to. These directions are relative directions set for a vehicle 100 illustrated in FIG. 1 or a vehicle 1100 illustrated in FIG. 8. Here, the "left and right direction" is a direction that includes a "left direction" and a "right direction", and is also a vehicle width direction of the vehicle 100. The "up and down direction" is a direction that includes an "up direction" and a "down direction". The "front and rear direction" is a direction that includes a "front direction" and "rear direction". The front and rear direction is a direction perpendicular to the left and right direction and the up and down direction.

### First Embodiment

First, the vehicle 100 provided with vehicle lamps 1 according to a first embodiment (the vehicle lamp 1 being an example of a road surface rendering device, and hereinafter, also referred to as a "lamp 1") will be described below with reference to FIG. 1. FIG. 1 is a plan view of the vehicle 100 provided with the vehicle lamps 1 according to the first embodiment. The vehicle 100 is a vehicle (automobile) that can be driven in a manual operation mode or an automatic operation mode, for example. The lamps 1 each render an image (a road surface rendering pattern) indicating predetermined information on a road surface by projecting light onto the road surface.

The lamps 1 are mounted on, for example, on headlights mounted on the left and right of a front portion of the vehicle 100. However, a placement position and a configuration of the lamp 1 are not particularly limited. For example, the lamps 1 may be mounted on tail lights or backlights mounted on a rear portion of the vehicle 100. The lamp 1 may be mounted on the vehicle 100 alone. For example, the lamp 1 may be disposed on a roof 100A.

The lamp 1 renders information indicating an operation of the vehicle 100 on the road surface. The information indicating the operation of the vehicle 100 is, for example, information on a traveling direction of a host vehicle. For example, if a left turn of the vehicle 100 is determined, the lamp 1 illuminates a front left side of the vehicle 100 with a road surface rendering pattern P1 to present the left turn of the vehicle 100 to the outside. For example, if a right turn of the vehicle 100 is determined, the lamp 1 illuminates a front right side of the vehicle 100 with a road surface rendering pattern P2 to present the right turn of the vehicle 100 to the outside. The road surface rendering patterns P1 and P2 are elongated in a direction away from the lamp 1 and have a substantially rectangular shape. In the present embodiment, for convenience of description, a longitudinal direction of each of the road surface rendering patterns P1 and P2 is referred to as a direction D1, and a direction perpendicular to the direction D1 is referred to as a direction D2. A rendering method of the lamp 1 is not particularly limited, and for example, a projection method or a scanning method may be adopted.

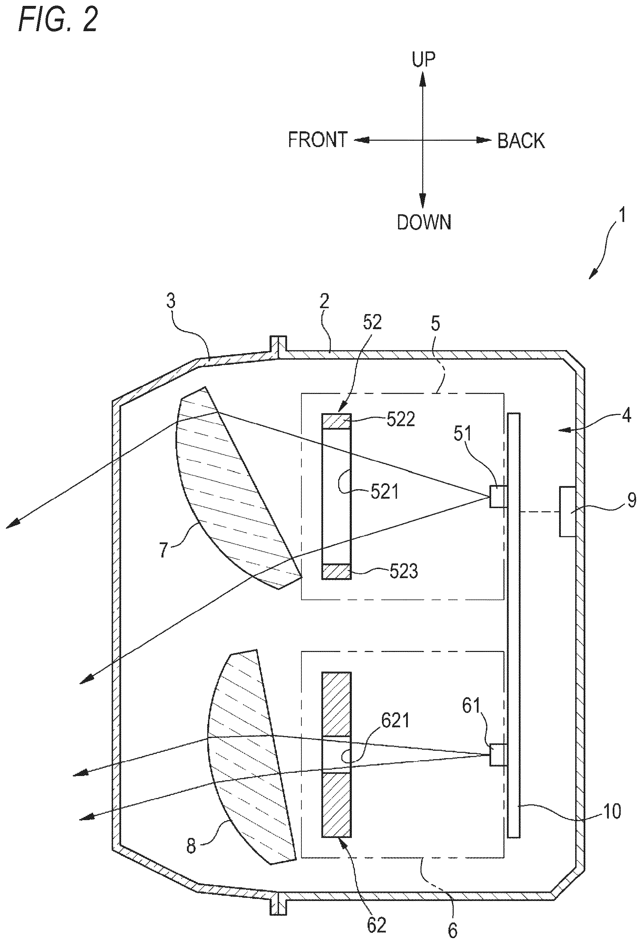

Next, the vehicle lamp 1 will be described in detail with reference to FIG. 2. As illustrated in FIG. 2, the lamp 1 includes a lamp body 2 having an opening in the front of the lamp, and a transparent outer cover 3 that covers the opening of the lamp body 2. In a lamp house 4 formed by the lamp body 2 and the outer cover 3, a first illumination unit 5, a second illumination unit 6, a first projection lens 7, a second projection lens 8, and a control unit 9 are housed.

The first illumination unit 5 includes a first light source 51 and a first light shielding plate 52 (an example of a first light shielding portion). The first light source 51 is implemented by, for example, a light emitting diode (LED) element or a laser diode (LD) element. The first light source 51 may be implemented by a semiconductor light emitting that emits laser light.

The first light shielding plate 52 is a plate-shaped member having a substantially rectangular shape. The first light shielding plate 52 has a first hole portion 521. The first hole portion 521 is a hole having a substantially rectangular shape, and is provided on a portion other than a first end portion 522 and a second end portion 523 of the first light shielding plate 52. The first hole portion 521 allows at least a part of light emitted from the first light source 51 to pass therethrough. In the first light shielding plate 52, light is shielded in a portion other than the first hole portion 521, that is, in the first end portion 522 and the second end portion 523. Therefore, among light emitted from the first light source 51, the first light shielding plate 52 allows light emitted to the first hole portion 521 of the first light shielding plate 52 to pass through, but shields light emitted to the first end portion 522 and the second end portion 523.

The second illumination unit 6 includes a second light source 61 and a second light shielding plate 62 (an example of a second light shielding portion). The second light source 61 may have the same configuration as the first light source 51.

The second light shielding plate 62 has a second hole portion 621. The second hole portion 621 is a hole having a substantially rectangular shape, and is provided on a central portion of the second light shielding plate 62. The second hole portion 621 allows at least a part of light emitted from the second light source 61 to pass therethrough. In the second light shielding plate 62, light is shielded in a portion other than the second hole portion 621. Therefore, among light emitted from the second light source 61, the second light shielding plate 62 allows light emitted to the second hole portion 621 of the second light shielding plate 62 to pass through, but shields light emitted to the portion other than the second hole portion 621. The first hole portion 521 is larger than the second hole portion 621. Therefore, an amount of light shielded by the first light shielding plate 52 is less than an amount of light shielded by the second light shielding plate 62.

The first light source 51 and the second light source 61 are mounted on a single substrate 10. The substrate 10 may be formed of, for example, a glass material such as silica glass, borosilicate silicate glass, or non-alkali borosilicate silicate glass, or a resin material such as polyethylene terephthalate, polyethylene naphthalate, polypropylene, or a cycloolefin polymer.

The first projection lens 7 is a plano-convex lens having a flat incident surface and a convex emission surface. The first projection lens 7 is formed of a transparent material such as a transparent resin such as acrylic, and has transparency. The first projection lens 7 is inclined to project light emitted from the first light source 51 forward and downward.

The second projection lens 8 may have the same configuration as the first projection lens 7. The second projection lens 8 is inclined to project light emitted from the second light source 61 forward and downward.

The control unit 9 controls the first light source 51 and the second light source 61 to illuminate the road surface around the vehicle 100 with the road surface rendering patterns P1 and P2. The control unit 9 includes a microcontroller and an analog drive control circuit. The microcontroller includes a processor such as a CPU and a memory such as a ROM. The analog drive control circuit includes a current control circuit for controlling a current to be supplied to the first light source 51 and the second light source 61.

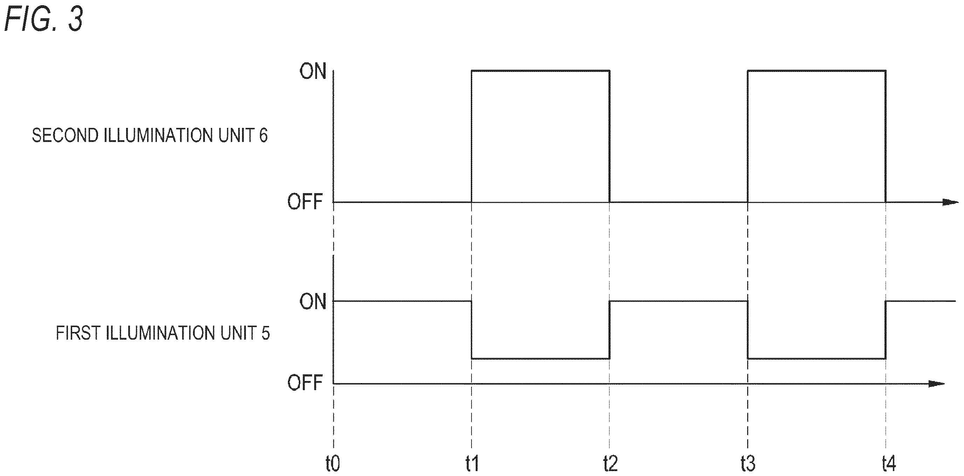

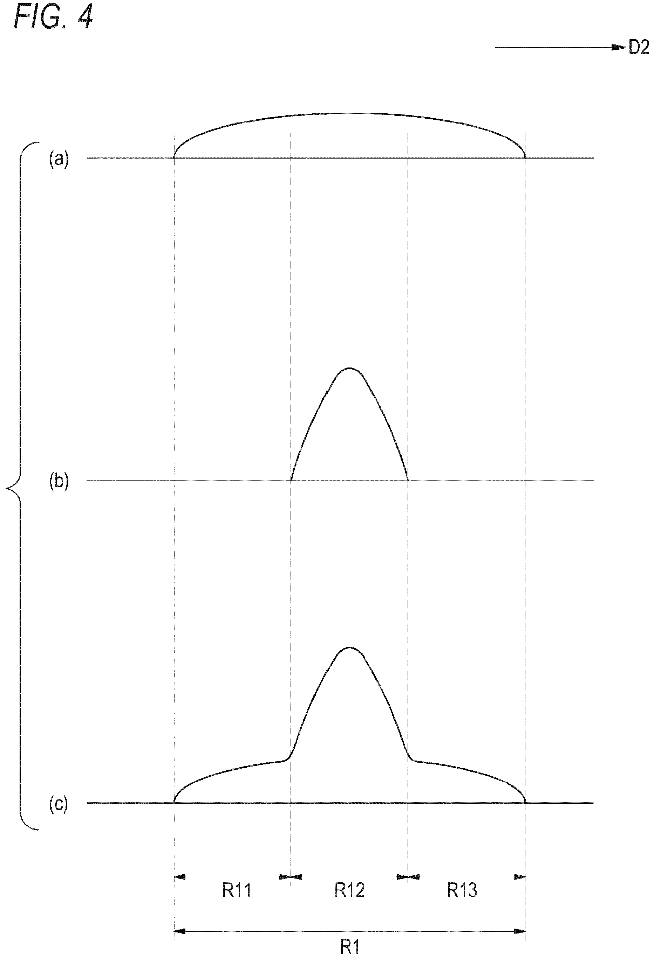

Next, the road surface rendering pattern P1 rendered by the lamp 1 will be described in detail with reference to FIGS. 3 and 4. FIG. 3 is a timing chart diagram illustrating timings for turning the first illumination unit 5 and the second illumination unit 6 on and off. FIG. 4 is an example of an illuminance distribution of the road surface rendering pattern P1. FIG. 4 illustrates the illuminance distribution of the road surface rendering pattern P1 on a line segment X illustrated in FIG. 1. An illuminance distribution of the road surface rendering pattern P2 is the same as the illuminance distribution of the road surface rendering pattern P1, and thus only the illuminance distribution of the road surface rendering pattern P1 will be described in the present specification.

In the present embodiment, for convenience of description, a region illuminated with light emitted from the first light source 51 is referred to as an illumination region R1. The illumination region R1 extends along a direction away from the lamp 1 provided on the vehicle 100. In the present embodiment, for convenience of description, the illumination region R1 is divided in the direction D2 intersecting the longitudinal direction D1, and the divided regions are referred to as a left region R11, a central region R12, and a right region R13, respectively. In the direction D2, the illumination region R1 may be divided not only into three regions but into two regions or four or more regions. As illustrated in (a) in FIG. 4, light emitted from the first light source 51 is emitted to the left region R11, the central region R12, and the right region R13. On the other hand, light emitted from the second light source 61 is emitted only to the central region R12 as illustrated in (b) in FIG. 4.

As illustrated in FIG. 3, from a time t0 to a time t1, the control unit 9 controls the first light source 51 of the first illumination unit 5 to emit light and controls the second light source 61 of the second illumination unit 6 not to emit light. Therefore, from the time t0 to the time t1, only light emitted from the first light source 51 is equally emitted to the left region R11, the central region R12, and the right region R13, and thus an illuminance of the left region R11, an illuminance of the central region R12, and an illuminance of the right region R13 are substantially uniform.

From the time t1 to a time t2, the control unit 9 controls the first light source 51 of the first illumination unit 5 to emit light and controls the second light source 61 of the second illumination unit 6 to emit light. At this time, the control unit 9 makes an intensity of light emitted from the first light source 51 of the first illumination unit 5 to be smaller than an intensity of light emitted from the first light source 51 of the first illumination unit 5 when the second illumination unit 6 is turned off (for example, during a period from the time t0 to the time t1).

From time t1 to time t2, the control unit 9 makes an intensity of light emitted from the second light source 61 of the second illumination unit 6 to be larger than the intensity of light emitted from the first light source 51 of the first illumination unit 5. Therefore, as illustrated in (a) and (b) in FIG. 4, the illuminance of the central region R12 illuminated with light emitted from the second light source 61 is larger than the illuminance of the central region R12 illuminated with light emitted from the first light source 51. Therefore, as illustrated in (c) in FIG. 4, the illuminance of the central region R12 of the road surface rendering pattern P1 formed from the time t1 to the time t2 is larger than illuminances of the other regions (the left region R11 and the right region R13).

A control executed by the control unit 9 from the time t2 to a time t3 is the same as the control executed by the control unit 9 from the time t0 to the time t1, and the description thereof will be omitted. A control executed by the control unit 9 from the time t3 to a time t4 is the same as the control executed by the control unit 9 from the time t1 to the time t2, and the description thereof will be omitted. Accordingly, the first illumination unit 5 is constantly turned on, but the second illumination unit 6 is repeatedly turned on and off at predetermined time intervals. The intensity of light emitted from the first illumination unit 5 when the second illumination unit 6 is turned on is smaller than the intensity of light emitted from the first illumination unit 5 when the second illumination unit 6 is turned off.

A road surface rendering is generally provided below a line of sight of a person, and thus the road surface rendering is likely to be overlooked by a pedestrian or the like. There is a need to increase visibility of the road surface rendering.

According to the lamp 1 having the above configuration, the illuminance of the central region R12 is larger than the illuminance of the left region R11 and the illuminance of the right region R13. More specifically, when the illumination region R1 is divided into a plurality of regions (the left region R11, the central region R12, and the right region R13) in the direction D2 intersecting the longitudinal direction D1, the illuminance of the central region R12 is different from the illuminance of the left region R11 and the illuminance of the right region R13. The road surface rendering patterns P1 and P2 can be easily noticed by a pedestrian or the like in a case in which a region having a large illuminance is formed at the center relative to a case in which all the regions are illuminated with uniform illuminance. Therefore, according to the lamp 1 having the above configuration, a road surface rendering that can be easily visually recognized can be provided.

According to the lamp 1 having the above configuration, the second illumination unit 6 blinks in a state in which the first illumination unit 5 is turned on. The lamp 1 can form a rendering that can be easily visually recognized at all times by the first illumination unit 5 and can draw attention of a person by the second illumination unit 6, and thus the road surface rendering patterns P1 and P2 rendered by the lamp 1 can be easily noticed by a pedestrian or the like. Therefore, according to the lamp 1, a road surface rendering that can be easily visually recognized can be provided.

According to the lamp 1 having the above configuration, when the second illumination unit 6 is turned on, the intensity of light emitted from the first illumination unit 5 is decreased. Therefore, for example, even if the first light source 51 of the first illumination unit 5 and the second light source 61 of the second illumination unit 6 have the same configuration, the illuminance of the central region R12 is larger than the illuminance of the left region R11 and the illuminance of the right region R13. Therefore, the road surface rendering patterns P1 and P2 rendered by the lamp 1 can be easily noticed by a pedestrian or the like. Therefore, according to the lamp 1, a road surface rendering that can be easily visually recognized can be provided.

According to the lamp 1 having the above configuration, the lamp 1 includes the first illumination unit 5 including the first light source 51 and the first light shielding plate 52, and the second illumination unit 6 including the second light source 61 and the second light shielding plate 62. Therefore, according to the lamp 1, a road surface rendering that can be easily visually recognized can be provided with such a simple and inexpensive configuration.

### Modification of First Embodiment

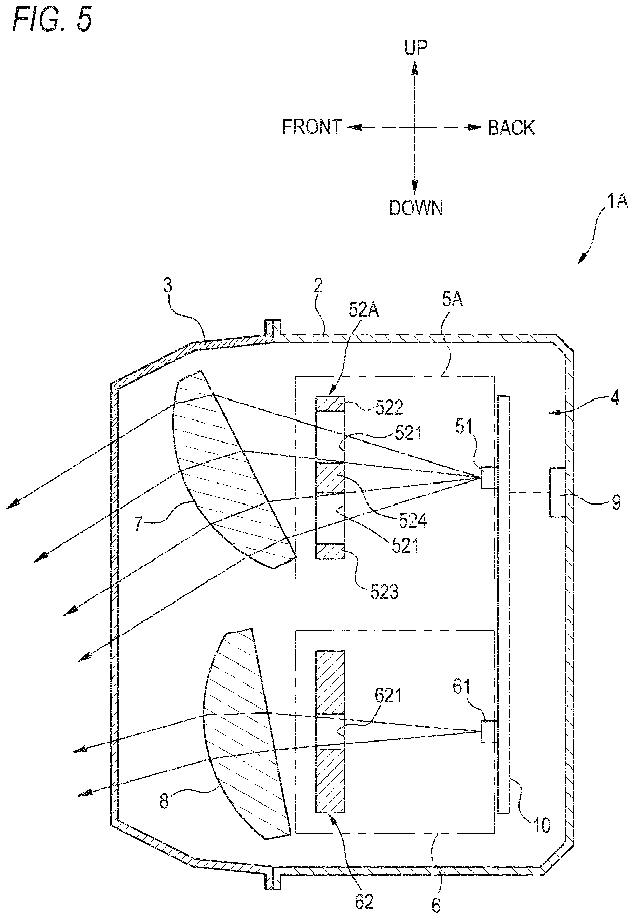

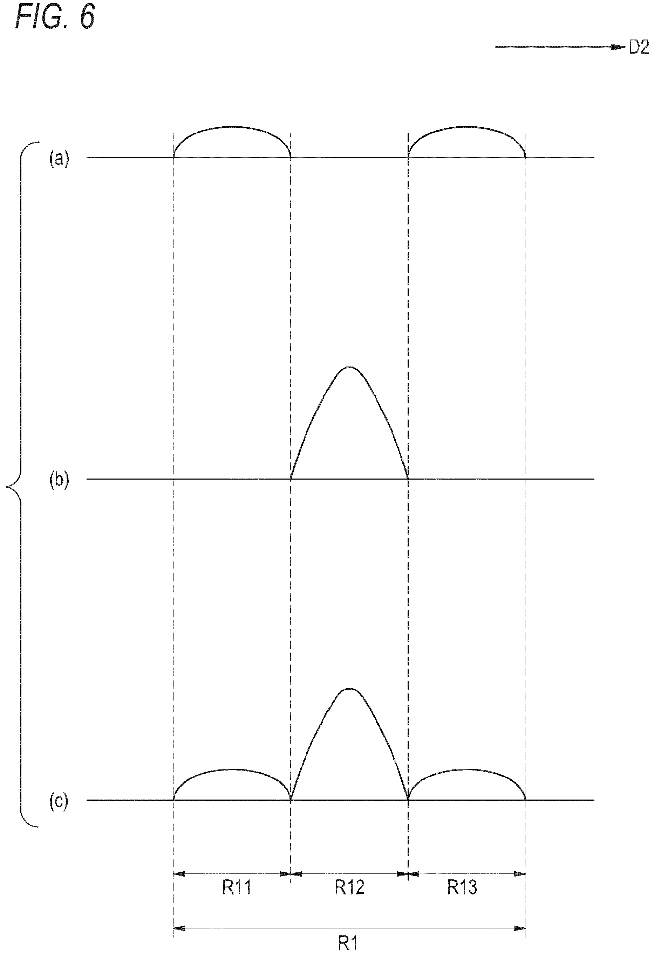

Next, a vehicle lamp 1A according to a modification of the first embodiment (the lamp 1A being an example of the road surface rendering device, and hereinafter, also referred to as a "lamp 1A") will be described with reference to FIGS. 5 and 6. In a description of the present modification, the same reference numerals are given to portions overlapping with the description of the first embodiment, and the description thereof will be appropriately omitted. As illustrated in FIG. 5, the lamp 1A according to the present modification is different from the lamp 1 according to the first embodiment in that the lamp 1A includes, instead of the first illumination unit 5, a first illumination unit 5A including the first light source 51 and a first light shielding plate 52A in which a central portion 524 is not a hole. That is, in the lamp 1A according to the present modification, the first hole portions 521 are provided in portions other than the first end portion 522, the second end portion 523, and the central portion 524. Therefore, in the present modification, light emitted from the first illumination unit 5A is not emitted to the central region R12 but is emitted only to the left region R11 and the right region R13. Light emitted from the first light source 51 is equally emitted to the left region R11 and the right region R13, and thus an illuminance of the left region R11 and an illuminance of the right region R13 are substantially uniform.

Next, the road surface rendering pattern P1 rendered by the lamp 1A will be described in detail with reference to FIG. 6. FIG. 6 is a diagram illustrating an illuminance distribution of the road surface rendering pattern P1 rendered by the lamp 1A from the time t1 to the time t2. FIG. 6 illustrates the illuminance distribution of the road surface rendering pattern P1 on the line segment X illustrated in FIG. 1. As illustrated in (a) and (b) in FIG. 6, in the present modification, from the time t1 to the time t2, the first illumination unit 5A illuminates the left region R11 and the right region R13 with light emitted from the first light source 51. On the other hand, the second illumination unit 6 illuminates only the central region R12 with light emitted from the second light source 61. That is, the central region R12 is illuminated with only light emitted from the second light source 61. Also in the present modification, the control unit 9 makes an intensity of light emitted from the second light source 61 of the second illumination unit 6 to be larger than an intensity of light emitted from the first light source 51 of the first illumination unit 5A from the time t1 to the time t2. Therefore, as illustrated in (c) in FIG. 6, from the time t1 to the time t2, an illuminance of the central region R12 is larger than the illuminance of the left region R11 and the illuminance of the right region R13. Therefore, the illuminance of the central region R12 of the road surface rendering pattern P1 formed from the time t1 to the time t2 is larger than the illuminances of the other regions (the left region R11 and the right region R13).

Accordingly, the lamp 1A according to the present modification can also achieve the same effect as that of the lamp 1 according to the first embodiment.

### Second Embodiment

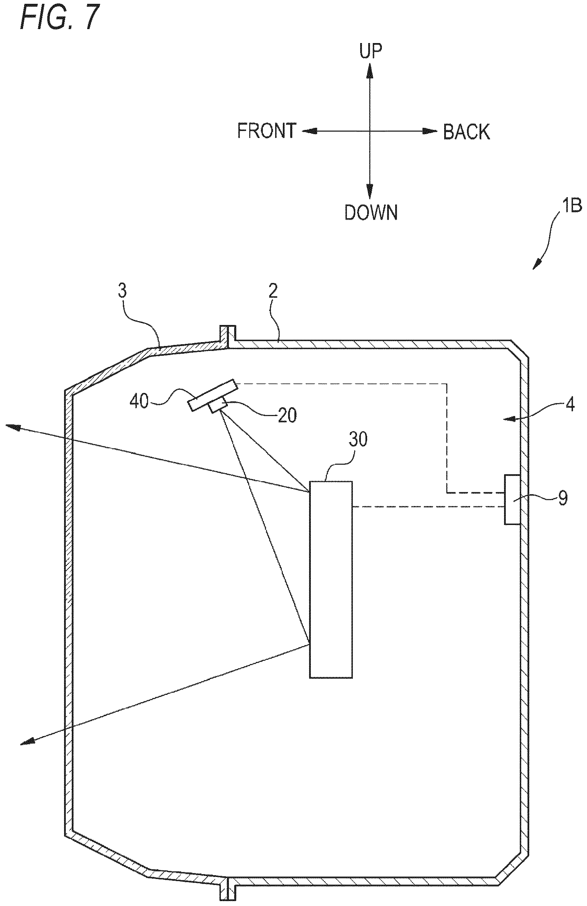

Next, a vehicle lamp 1B according to a second embodiment (the vehicle lamp 1B being an example of the road surface rendering device, and hereinafter, also referred to as a "lamp 1B") will be described below with reference to FIG. 7. In a description of the second embodiment, the same reference numerals are given to portions overlapping with the description of the first embodiment, and the description thereof will be appropriately omitted. FIG. 7 is a diagram illustrating the lamp 1B. The lamp 1B is different from the lamp 1 according to the first embodiment in that the lamp 1B includes a single light source 20 and a driving mirror 30 (an example of a scanning unit) instead of the first illumination unit 5, the second illumination unit 6, the first projection lens 7, and the second projection lens 8.

The light source 20 may have the same configuration as the first light source 51. The light source 20 is mounted on a substrate 40 having the same configuration as the substrate 10. The light source 20 emits light toward the driving mirror 30.

The driving mirror 30 may include, for example, a micro-electro mechanical systems (MEMS) mirror, a digital mirror device (DMD), or a blade mirror. For example, in a case in which the driving mirror 30 is a MEMS mirror, light emitted from the light source 20 is emitted to the left region R11, the central region R12, and the right region R13 by performing scanning with the MEMS mirror. As a result, the road surface rendering patterns P1 and P2 are formed on a road surface.

The control unit 9 controls the light source 20 and the driving mirror 30. The control unit 9 controls a scanning direction and a scanning speed of light that is emitted from the light source 20 and is used for scanning by the driving mirror 30. Among light emitted from the light source 20, the control unit 9 controls the light source 20 to make an intensity of light emitted to the central region R12 to be larger than an intensity of light emitted to the left region R11 and the right region R13. Therefore, an illuminance of the central region R12 is larger than an illuminance of the left region R11 and an illuminance of the right region R13.

According to the lamp 1B having the above configuration, the lamp 1B may include the light source 20 and the driving mirror 30, and thus a road surface rendering that can be easily visually recognized can be provided with a smaller number of components.

### Third Embodiment

Next, the vehicle 1100 provided with vehicle lamps 11 according to a third embodiment (the vehicle lamp 11 being an example of the road surface rendering device, and hereinafter, also referred to as a "lamp 11") will be described below with reference to FIG. 8. FIG. 8 is a plan view of the vehicle 1100 provided with the lamps 11 according to the third embodiment. The vehicle 1100 is a vehicle (automobile) that can be driven in a manual operation mode or an automatic operation mode, for example.

The lamps 11 are mounted on, for example, on headlights mounted on the left and right of a front portion of the vehicle 1100. However, a placement position and a configuration of the lamp 11 is not particularly limited. For example, the lamps 11 may be mounted on tail lights or backlights mounted on a rear portion of the vehicle 1100. The lamp 11 may be mounted on the vehicle 1100 alone. For example, the lamp 11 may be disposed on a roof 1100A.

The lamp 11 renders information indicating an operation of the vehicle 1100 on a road surface. The information indicating the operation of the vehicle 1100 is, for example, information on a traveling direction of a host vehicle. For example, if a left turn of the vehicle 1100 is determined, the lamp 11 illuminates a front left side of the vehicle 1100 with a road surface rendering pattern P 11 to present the left turn of the vehicle 1100 to the outside. For example, if a right turn of the vehicle 1100 is determined, the lamp 11 illuminates a front right side of the vehicle 1100 with a road surface rendering pattern P12 to present the right turn of the vehicle 1100 to the outside. The road surface rendering patterns P11 and P12 are elongated in a direction away from the lamp 11 and have a substantially rectangular shape. A rendering method of the lamp 11 is not particularly limited, and for example, a projection method or a scanning method may be adopted.

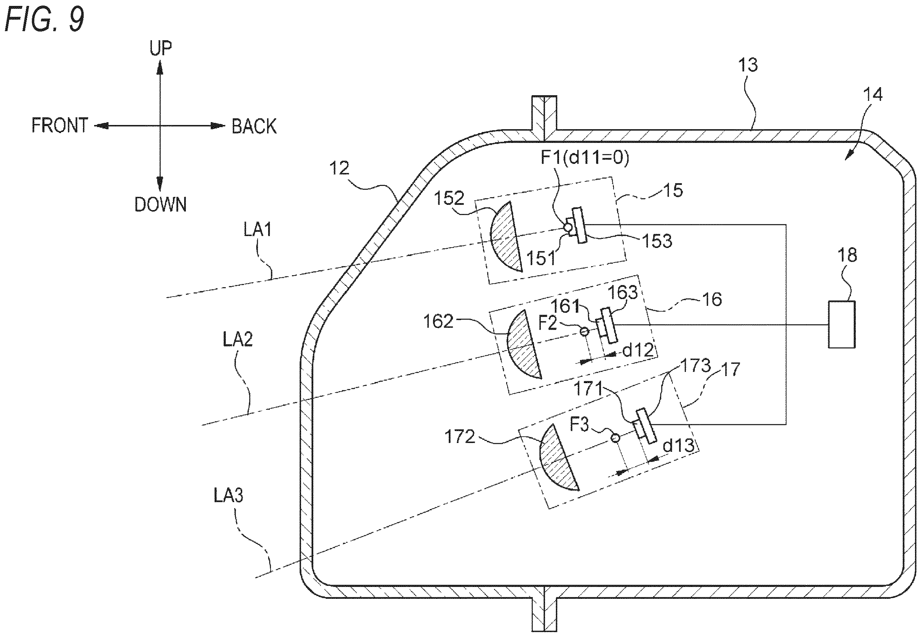

Next, the lamp 11 will be described in detail with reference to FIG. 9. As illustrated in FIG. 9, the lamp 11 includes a lamp body 12 having an opening in the front of the lamp, and a transparent outer cover 13 that covers the opening of the lamp body 12. In a lamp house 14 formed by the lamp body 12 and the outer cover 13, a first unit 15, a second unit 16, a third unit 17, and an illumination control unit 18 are housed.

The first unit 15 includes a first light source 151 and a first projection lens 152. The second unit 16 includes a second light source 161 and a second projection lens 162. The third unit 17 includes a third light source 171 and a third projection lens 172.

The first light source 151 is implemented by, for example, a light emitting diode (LED) element or a laser diode (LD) element. The second light source 161 and the third light source 171 may have the same configuration as the first light source 151. In the present embodiment, the first light source 151, the second light source 161, and the third light source 171 all emit light having substantially the same luminosity. The illumination control unit 18 controls turning on and off of the first light source 151, the second light source 161, and the third light source 171.

The first light source 151 is mounted on a first substrate 153. The first substrate 153 is a plate-shaped member. The first substrate 153 is formed of, for example, a glass material such as silica glass, borosilicate silicate glass, or non-alkali borosilicate silicate glass, or a resin material such as polyethylene terephthalate, polyethylene naphthalate, polypropylene, or a cycloolefin polymer. The second light source 161 is mounted on a second substrate 163 having the same configuration as the first substrate 153. The third light source 171 is mounted on a third substrate 173 having the same configuration as the first substrate 153.

The first projection lens 152 is an aspherical lens in which a front surface is a convex surface and a rear surface is a flat surface. The first projection lens 152 is formed of a transparent material such as a transparent resin such as acrylic. The first projection lens 152 projects light emitted from the first light source 151 in front of the lamp 11. The second projection lens 162 and the third projection lens 172 may have the same configuration as the first projection lens 152. The second projection lens 162 projects light emitted from the second light source 161 in front of the lamp 11. The third projection lens 172 projects light emitted from the third light source 171 in front of the lamp 11. A focal length of the first projection lens 152, a focal length of the second projection lens 162, and a focal length of the third projection lens 172 are equal to each other.

The first light source 151 is disposed at a position of a focal point F1 of the first projection lens 152. Accordingly, a first separation distance d11 from the focal point F1 of the first projection lens 152 of the first light source 151 is zero. On the other hand, the second light source 161 is positioned behind a focal point F2 of the second projection lens 162, and the third light source 171 is positioned behind a focal point F3 of the third projection lens 172. Therefore, the first separation distance d11 is shorter than a second separation distance d12 from the focal point F2 of the second projection lens 162 of the second light source 161 and a third separation distance d13 from the focal point F3 of the third projection lens 172 of the third light source 171. In the present embodiment, the second separation distance d12 is shorter than the third separation distance d13.

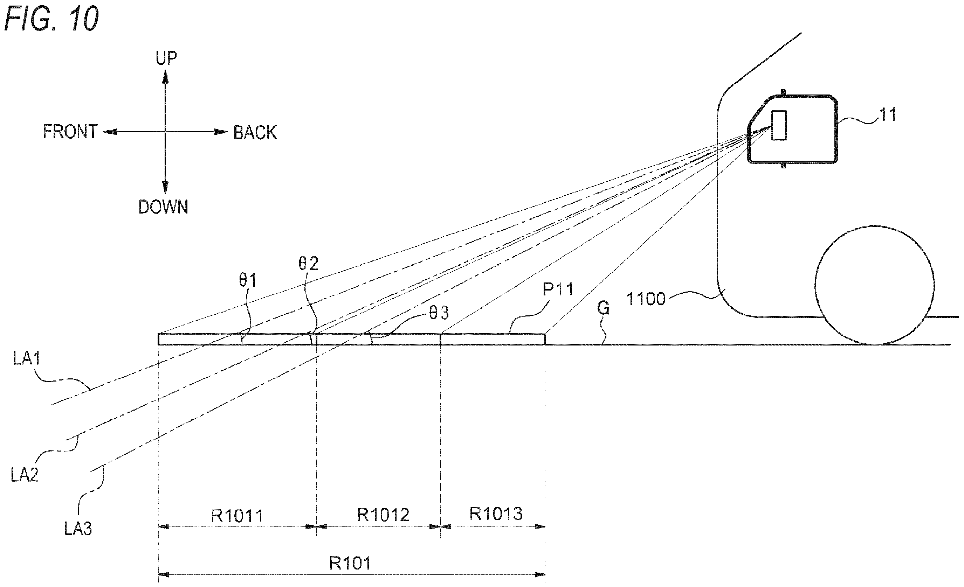

The first projection lens 152, the second projection lens 162, and the third projection lens 172 are disposed at different angles with respect to a road surface G (see FIG. 10). Accordingly, an optical axis LA1 of the first projection lens 152, an optical axis LA2 of the second projection lens 162, and an optical axis LA3 of the third projection lens 172 are not parallel, and the optical axis LA2 and the optical axis LA3 are inclined with respect to the optical axis LA1. An inclination angle θ1 of the optical axis LA1, an inclination angle θ2 of the optical axis LA2, and an inclination angle θ3 of the optical axis LA3 with respect to the road surface G around the vehicle 1100 (see FIG. 10) are increased in this order.

Next, a state in which light is emitted from the lamp 11 toward the road surface will be described with reference to FIG. 10. For example, when a vehicle control unit provided on the vehicle 1100 determines the left turn of the vehicle 1100 or when the left turn of the vehicle is determined according to an operation of a turn signal lever performed by a driver, the vehicle control unit transmits an instruction signal for instructing illumination of the road surface rendering pattern P11 to the illumination control unit 18. Thereafter, the illumination control unit 18 controls the first light source 151, the second light source 161, and the third light source 171 to illuminate the road surface with the road surface rendering pattern P11 based on the received instruction signal. As a result, a rendering region R101 extending along a distance from the lamp 11 provided on the vehicle 1100 illustrated in FIG. 8 is illuminated with light, and the road surface rendering pattern P11 is rendered on the rendering region R101.

In the present embodiment, when the rendering region R101 is divided into a plurality of divided regions in a perspective direction (a front and rear direction in FIG. 10), a divided region farthest from the vehicle 1100 is referred to as a farthest region R1011, a divided region closest to the vehicle 1100 is referred to as a nearest region R1013, and a remaining divided region is referred to as an intermediate region R1012. The intermediate region R1012 is continuous from the farthest region R1011, and the nearest region R1013 is continuous from the intermediate region R1012. The division of the rendering region R101 in the perspective direction of the vehicle 1100 may be performed in a manner that the farthest region R1011, the intermediate region R1012, and the nearest region R1013 are decreased in this order as illustrated in FIG. 10, may be performed in a manner that the farthest region R1011, the intermediate region R1012, and the nearest region R1013 are increased in this order, or may be performed in a manner of equally dividing into three regions. Alternatively, the rendering region R101 may by divided randomly in the perspective direction of the vehicle 1100. In the perspective direction of the vehicle 1100, the rendering region R101 may be divided not only into three regions but into two regions or four or more regions.

In the present embodiment, the lamp 11 illuminates only the farthest region R1011 with light when the first light source 151 is turned on. The lamp 11 illuminates the farthest region R1011 and the intermediate region R1012 with light when the second light source 161 is turned on. The lamp 11 illuminates all of the farthest region R1011, the intermediate region R1012, and the nearest region R1013 with light when the third light source 171 is turned on.

Light emitted from the lamp 11 is emitted toward the outside of the vehicle 1100. At this time, the first separation distance d11 is shorter than the second separation distance d12 and the third separation distance d13, and thus an illumination range illuminated by the first light source 151 is narrower than illumination ranges illuminated by the second light source 161 and the third light source 171. Therefore, in the present embodiment, the lamp 11 illuminates only the farthest region R1011 with light emitted from the first light source 151. The second separation distance d12 is shorter than the third separation distance d13, and thus the illumination range illuminated by the second light source 161 is narrower than the illumination range illuminated by the third light source 171. Therefore, in the present embodiment, the lamp 11 illuminates all of the farthest region R1011, the intermediate region R1012, and the nearest region R1013 with light emitted from the third light source 171. The optical axis LA2 of the second projection lens 162 and the optical axis LA3 of the third projection lens 172 are inclined with respect to the optical axis LA1 of the first projection lens 152, and the inclination angle θ1 of the optical axis LA1, the inclination angle θ2 of the optical axis LA2, and the inclination angle θ3 of the optical axis LA3 with respect to the road surface G around vehicle 1100 are increased in this order. By inclining the respective optical axes in this manner, a position of a farthest end portion of the illumination range illuminated by the first light source 151 and a position of a farthest end portion of the illumination range illuminated by the second light source 161 are matched in the front and rear direction of the vehicle. In the present embodiment, the position of the farthest end portion of the illumination range illuminated by the first light source 151, the position of the farthest end portion of the illumination range illuminated by the second light source 161, and a position of a farthest end portion of the illumination range illuminated by the third light source 171 match each other in the front and rear direction of the vehicle 1100.

In the road surface rendering pattern emitted on the road surface, an illuminance of a region far from the host vehicle may be smaller than an illuminance of a region close to the host vehicle. In this case, a region of the road surface rendering pattern far from the host vehicle becomes dark, and thus visibility of the road surface rendering pattern may be decreased.

According to the vehicle lamp 11 having the above configuration, the illumination range (the farthest region R1011) illuminated with light of the first light source 151 is narrower than the illumination range (the farthest region R1011 and the intermediate region R1012) illuminated with light of the second light source 161 and the illumination range (the farthest region R1011, the intermediate region R1012, and the nearest region R1013) illuminated with light of the third light source 171. The farthest end portion of the illumination range of light from the second light source 161 and the farthest end portion of the illumination range of light from the third light source 171 overlap the farthest end portion of the illumination range of light from the first light source 151. Accordingly, light from the first light source 151, light from the second light source 161, and light from the third light source 171 are emitted in a manner of overlapping each other in the vicinity of farthest end portions of the road surface rendering patterns P11 and P12 (for example, the farthest region R1011), and thus the road surface rendering patterns P11 and P12 are bright and can be easily visually recognized.

According to the vehicle lamp 11 having the above configuration, the first separation distance d11 from the focal point F1 of the first projection lens 152 of the first light source 151 is shorter than the second separation distance d12 from the focal point F2 of the second projection lens 162 of the second light source 161 and the third separation distance d13 from the focal point F3 of the third projection lens 172 of the third light source 171. Accordingly, the illumination range illuminated with light of the first light source 151 is narrower than the illumination ranges illuminated with light of the second light source 161 and the third light source 171. The farthest end portion of the illumination range illuminated with light from the second light source 161 and the farthest end portion of the illumination range illuminated with light from the third light source 171 overlap the farthest end portion of the illumination range illuminated with light from the first light source 151. Accordingly, by adjusting the separation distance from the focal point of the projection lens of the light source, it is possible to render the road surface rendering patterns P11 and P12 that are bright and can be easily visually recognized.

### Fourth Embodiment

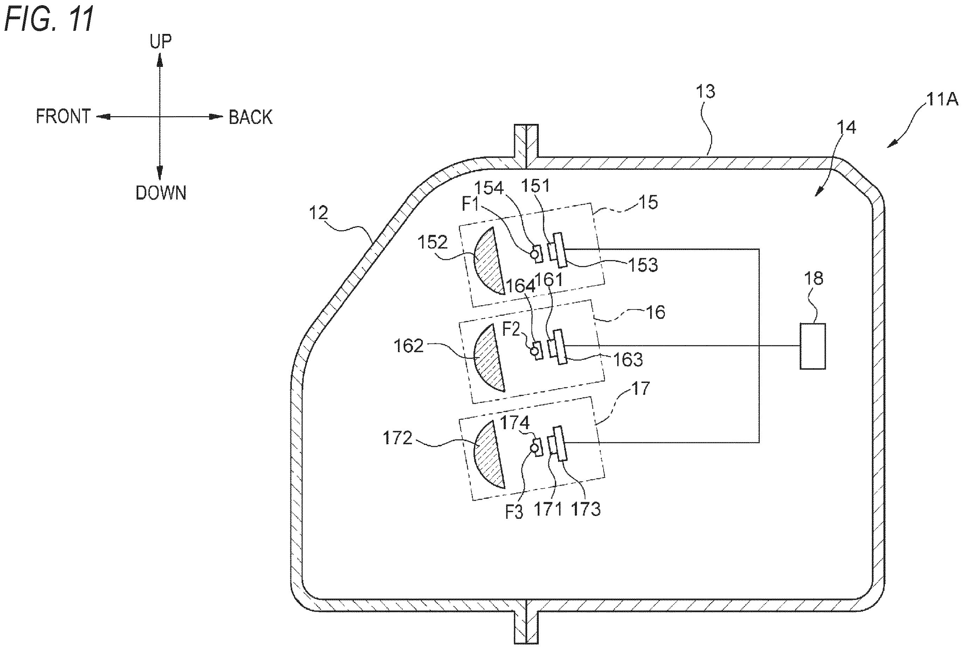

Next, a vehicle lamp 11A according to a fourth embodiment (the vehicle lamp 11A being an example of the road surface rendering device, and hereinafter, also referred to as a "lamp 11A") will be described below with reference to FIGS. 11 to 13. In a description of the fourth embodiment, the same reference numerals are given to portions overlapping with the description of the third embodiment, and the description thereof will be appropriately omitted. As illustrated in FIG. 11, in the lamp 11A, the first unit 15 includes a first light shielding plate 154 (an example of a first light shielding portion), the second unit 16 includes a second light shielding plate 164 (an example of a second light shielding portion), and the third unit 17 includes a third light shielding plate 174 (an example of the second light shielding portion). The lamp 11A is different from the lamp 11 according to the third embodiment in this point. In the fourth embodiment, the optical axis LA1 of the first projection lens 152, the optical axis LA2 of the second projection lens 162, and the optical axis LA3 of the third projection lens 172 may be parallel or may not be parallel.

As illustrated in FIG. 11, the first light shielding plate 154 is disposed in the vicinity of the focal point F1 of the first projection lens 152. The second light shielding plate 164 is disposed in the vicinity of the focal point F2 of the second projection lens 162. The third light shielding plate 174 is disposed in the vicinity of the focal point F3 of the third projection lens 172.

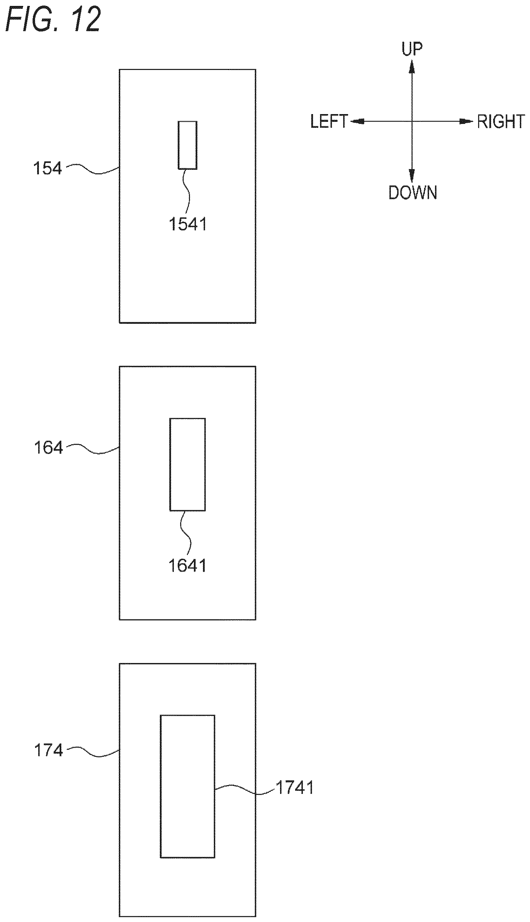

As illustrated in FIG. 12, the first light shielding plate 154 is a plate-shaped member having a substantially rectangular shape. The first light shielding plate 154 has a first hole portion 1541. The first hole portion 1541 is a hole having a substantially rectangular shape, and is provided in a region slightly above a central region of the first light shielding plate 154. The first hole portion 1541 allows at least a part of light emitted from the first light source 151 to pass therethrough. In the first light shielding plate 154, light is shielded in a portion other than the first hole portion 1541. Therefore, among light emitted from the first light source 151, the first light shielding plate 154 allows light emitted to the first hole portion 1541 of the first light shielding plate 154 to pass therethrough, but shields light emitted to the portion other than the first hole portion 1541.

The second light shielding plate 164 may be formed from the same plate-shaped member as the first light shielding plate 154. The second light shielding plate 164 has a second hole portion 1641. The second hole portion 1641 is a hole having a substantially rectangular shape, and is provided from a central region of the second light shielding plate 164 to a region slightly above the central region. The second hole portion 1641 allows at least a part of light emitted from the second light source 161 to pass therethrough. In the second light shielding plate 164, light is shielded in a portion other than the second hole portion 1641. Therefore, among light emitted from the second light source 161, the second light shielding plate 164 allows light emitted to the second hole portion 1641 of the second light shielding plate 164 to pass therethrough, but shields light emitted to the portion other than the second hole portion 1641.

The third light shielding plate 174 may be formed from the same plate-shaped member as the first light shielding plate 154. The third light shielding plate 174 has a third hole portion 1741. The third hole portion 1741 is a hole having a substantially rectangular shape, and is provided from a region slightly below a central region of the third light shielding plate 174 to a region slightly above the central region. The third hole portion 1741 allows at least a part of light emitted from the third light source 171 to pass therethrough. In the third light shielding plate 174, light is shielded in a portion other than the third hole portion 1741. Therefore, among light emitted from the third light source 171, the third light shielding plate 174 allows light emitted to the third hole portion 1741 of the third light shielding plate 174 to pass therethrough, but shields light emitted to the portion other than the third hole portion 1741.

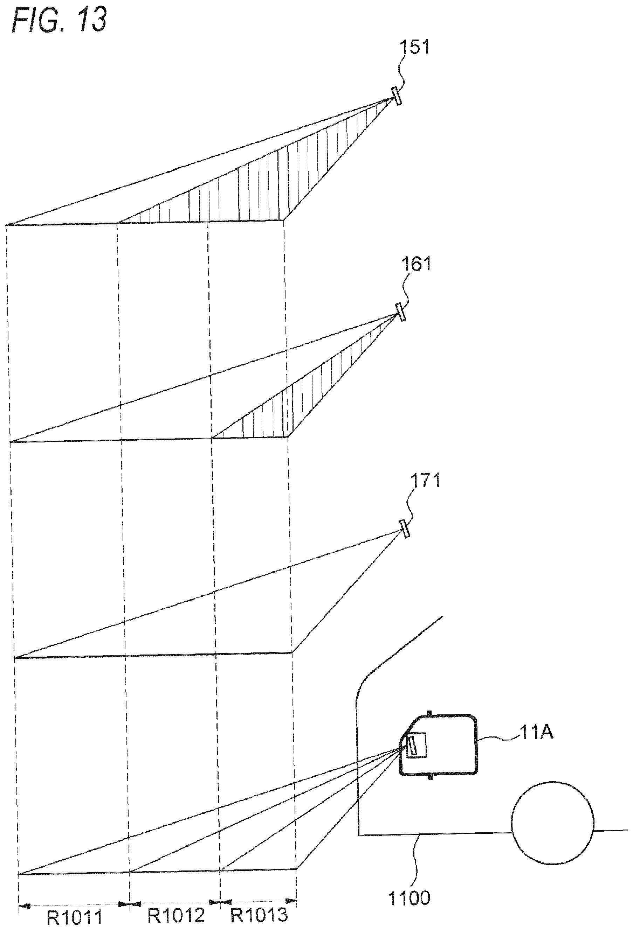

Next, a state in which light is emitted from the lamp 11A will be described with reference to FIG. 13. In FIG. 13, for convenience of illustration, the first light source 151, the second light source 161, and the third light source 171 are drawn in a manner of being separated from each other, but the first light source 151, the second light source 161, and the third light source 171 are disposed in the same lamp house 14 (see FIG. 11). The first light shielding plate 154 shields a part of light emitted from the first light source 151, and causes light passed through the first hole portion 1541 among light emitted from the first light source 151 to be emitted to only the farthest region R1011. The second light shielding plate 164 shields a part of light emitted from the second light source 161, and causes light passed through the second hole portion 1641 among light emitted from the second light source 161 to be emitted to the farthest region R1011 and the intermediate region R1012. The third light shielding plate 174 shields a part of light emitted from the third light source 171, and causes light passed through the third hole portion 1741 among light emitted from the third light source 171 to be emitted to all of the farthest region R1011, the intermediate region R1012, and the nearest region R1013. That is, according to the lamp 11A of the present embodiment, the farthest region R1011 is illuminated with light emitted from the first light source 151, the second light source 161, and the third light source 171. The intermediate region R1012 is illuminated with light emitted from the second light source 161 and the third light source 171. The nearest region R1013 is illuminated with only light emitted from the third light source 171.

A road surface rendering pattern rendered in a region far from the vehicle 1100 is more likely to be formed to be wider, and thus an illuminance tends to be smaller in the road surface rendering pattern rendered in the region far from the vehicle 1100.

According to the vehicle lamp 11A having the above configuration, light emitted from the first light source 151, the second light source 161, and the third light source 171 is emitted to the farthest region R1011 of the rendering region R101 in a manner of overlapping each other. Therefore, light emitted from the three light sources is emitted in a manner of overlapping each other in the farthest region R1011 which is likely to be dark, and thus according to the lamp 11A, the farthest region R1011 can be rendered brightly, and the road surface rendering patterns P11 and P12 having high visibility can be formed. It is preferable that lamp 11A is implemented in a manner of making an illuminance of the farthest region R1011, an illuminance of the intermediate region R1012, and an illuminance of the nearest region R1013 to be substantially equal to each other because the road surface rendering patterns P11 and P12 can be more easily visually recognized.

According to the vehicle lamp 11A having the above configuration, the road surface rendering patterns P11 and P12 that can be easily visually recognized can be rendered with a simple configuration using the light shielding plate.

### Fifth Embodiment

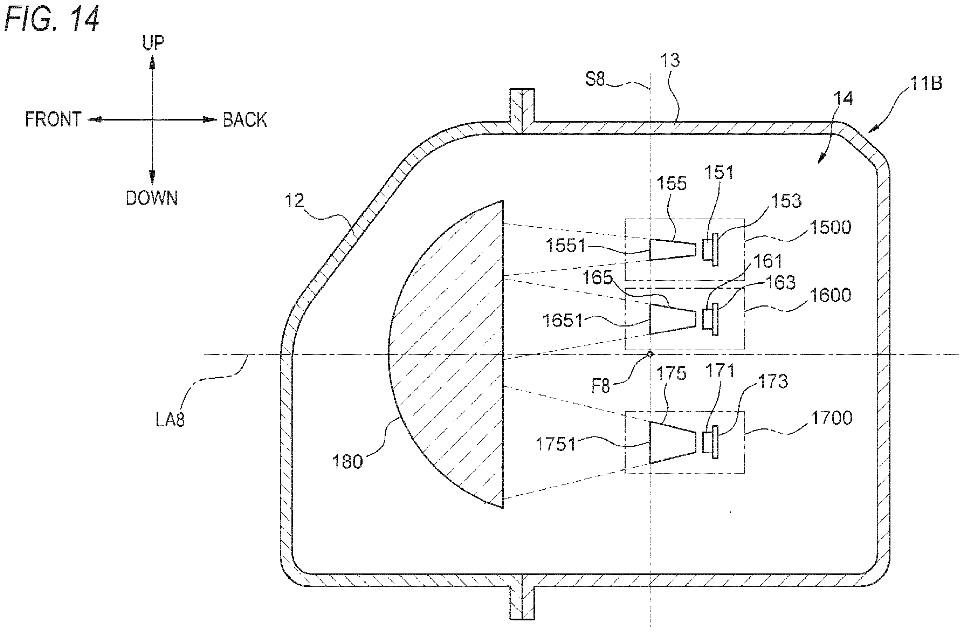

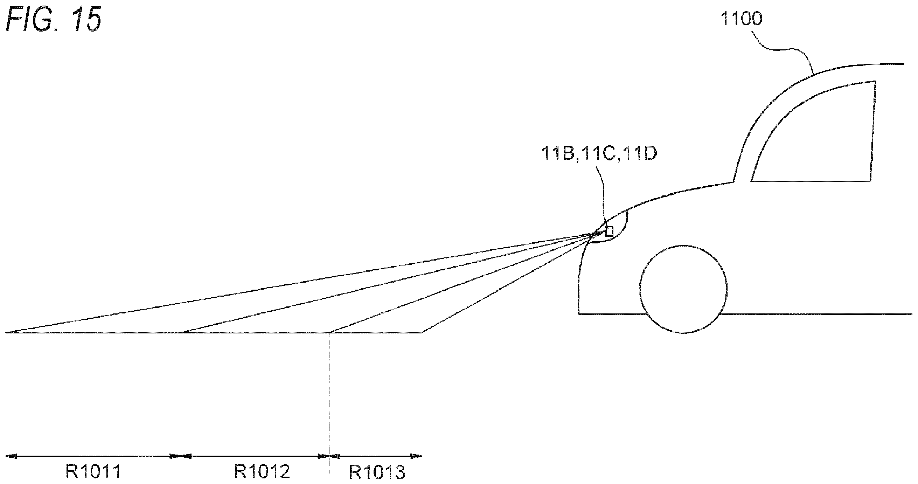

Next, a vehicle lamp 11B according to a fifth embodiment (the vehicle lamp 11B being an example of the road surface rendering device, and hereinafter, also referred to as a "lamp 11B") will be described below with reference to FIGS. 14 and 15. In a description of the fifth embodiment, the same reference numerals are given to portions overlapping with the descriptions of the third embodiment and the fourth embodiment, and the description thereof will be appropriately omitted. The vehicle lamp 11B according to the fifth embodiment is different from the vehicle lamp 11 according to the third embodiment in that the vehicle lamp 11B includes a first light guide body 155 (an example of a first optical component), a second light guide body 165 (an example of a second optical component), and a third light guide body 175 (an example of the second optical component). The vehicle lamp 11B according to the fifth embodiment is also different from the vehicle lamp 11 according to the third embodiment in that a single projection lens 180 is provided instead of the first projection lens 152, the second projection lens 162, and the third projection lens 172.

As illustrated in FIG. 14, the lamp 11B includes a first light source unit 1500, a second light source unit 1600, and a third light source unit 1700. The first light source unit 1500 includes the first light source 151 and the first light guide body 155. The second light source unit 1600 includes the second light source 161 and the second light guide body 165. The third light source unit 1700 includes the third light source 171 and the third light guide body 175. In the present embodiment, the first light source 151, the second light source 161, and the third light source 171 all emit light having the same intensity.

The first light guide body 155 is formed from, for example, a resin member having transparency. Such a resin member is made of, for example, a transparent thermoplastic resin such as a polycarbonate resin or an acrylic resin, or a thermosetting resin. Light emitted from the first light source 151 is incident on the first light guide body 155. The first light guide body 155 causes light incident on the first light guide body 155 to propagate through the first light guide body 155 while repeating internal reflection or refraction, and causes light to be emitted from an emission surface 1551 of the first light guide body 155. In this manner, light emitted from the first light source 151 passes through the first light guide body 155.

The second light guide body 165 may have the same configuration as the first light guide body 155. Light emitted from the second light source 161 is incident on the second light guide body 165. The second light guide body 165 causes light incident on the second light guide body 165 to propagate through the second light guide body 165 while repeating internal reflection or refraction, and causes light to be emitted from an emission surface 1651 of the second light guide body 165. In this manner, light emitted from the second light source 161 passes through the second light guide body 165.

The third light guide body 175 may have the same configuration as the first light guide body 155. Light emitted from the third light source 171 is incident on the third light guide body 175. The third light guide body 175 causes light incident on the third light guide body 175 to propagate through the third light guide body 175 while repeating internal reflection or refraction, and causes light to be emitted from an emission surface 1751 of the third light guide body 175. In this manner, light emitted from the third light source 171 passes through the third light guide body 175.

The emission surface 1551 of the first light guide body 155, the emission surface 1651 of the second light guide body 165, and the emission surface 1751 of the third light guide body 175 are disposed on a surface S8 that passes through a focal point F8 of the projection lens 180 and is perpendicular to an optical axis LA8 of the projection lens 180. An area of the emission surface 1551 of the first light guide body 155 is smaller than an area of the emission surface 1651 of the second light guide body 165 and an area of the emission surface 1751 of the third light guide body 175. The area of the emission surface 1651 of the second light guide body 165 is smaller than the area of the emission surface 1751 of the third light guide body 175.

The projection lens 180 is an aspherical lens in which a front surface is a convex surface and a rear surface is a flat surface. The projection lens 180 may be formed of the same material as the first projection lens 152.

In the present embodiment, light emitted from the first light source 151 is incident on the projection lens 180 via the first light guide body 155. The projection lens 180 projects an image corresponding to the emission surface of the first light guide body 155 in front of the lamp 11B. Light emitted from the second light source 161 is incident on the projection lens 180 via the second light guide body 165. The projection lens 180 projects an image corresponding to the emission surface of the second light guide body 165 in front of the lamp 11B. Light emitted from the third light source 171 is incident on the projection lens 180 via the third light guide body 175. The projection lens 180 projects an image corresponding to the emission surface of the third light guide body 175 in front of the lamp 11B. An equivalent light emission area when light emitted from each light source (the first light source 151, the second light source 161, and the third light source 171) is incident on the projection lens 180 corresponds to the area of the emission surface (the emission surface 1551, the emission surface 1651, and the emission surface 1751) of each light guide body. The equivalent light emission area when light emitted from each light source is incident on the projection lens 180 refers to a size of an image of light incident on the projection lens 180. Accordingly, the equivalent light emission area when light emitted from the first light source 151 is incident on the projection lens 180 is smaller than the equivalent light emission areas when light emitted from the other light sources (the second light source 161 and the third light source 171) is incident on the projection lens 180. The equivalent light emission area when light emitted from the second light source 161 is incident on the projection lens 180 is smaller than the equivalent light emission area when light emitted from the third light source 171 is incident on the projection lens 180.

In the present embodiment, all of the first light source 151, the second light source 161, and the third light source 171 emit light having the same intensity, and thus a density of light incident on the projection lens 180 is increased as the equivalent light emission area is decreased. In contrast, the density of light incident on the projection lens 180 is decreased as the equivalent light emission area is increased. The density of light is an amount of incident light per unit area. Therefore, the density of light emitted from the first light source 151 and incident on the projection lens 180 is larger than the density of light emitted from the other light sources (the second light source 161 and the third light source 171) and incident on the projection lens 180. The density of light emitted from the second light source 161 and incident on the projection lens 180 is larger than the density of light emitted from the third light source 171 and incident on the projection lens 180.

A road surface rendering pattern rendered in a region far from the vehicle 1100 is more likely to be formed to be wider, and thus an illuminance tends to be smaller in the road surface rendering pattern rendered in the region far from the vehicle 1100. Therefore, the lamp 11B according to the present embodiment emits light having a density that is increased as a distance between a region and the vehicle 1100 is increased. Specifically, as illustrated in FIG. 15, the lamp 11B emits light emitted from the first light source 151 having a largest light density to the farthest region R1011 (an example of a first region), emits light emitted from the third light source 171 having a smallest light density to the nearest region R1013 (an example of a second region), and emits light emitted from the second light source 161 having an intermediate light density to the intermediate region R1012 (an example of the second region).

According to the vehicle lamp 11B having the above configuration, the farthest region R1011 in which the road surface rendering pattern is likely to be formed to be wider is illuminated with light that is incident on the projection lens 180 and is squeezed with a small equivalent light emission area. Therefore, the farthest region R1011 which tends to be dark can be illuminated brightly. Therefore, the road surface rendering patterns P11 and P12 formed by the lamp 11B can be easily visually recognized.

According to the vehicle lamp 11B having the above configuration, even when the first light source 151, the second light source 161, and the third light source 171 emit light having the same luminosity, the farthest region R1011 can be illuminated more brightly than the other regions (the intermediate region R1012 and the nearest region R1013). Therefore, the lamp 11B can form the road surface rendering patterns P11 and P12 that can be easily visually recognized without making the luminosity of light emitted from the first light source 151 to be larger than the luminosities of light emitted from the second light source 161 and light emitted from the third light source 171.

### Sixth Embodiment

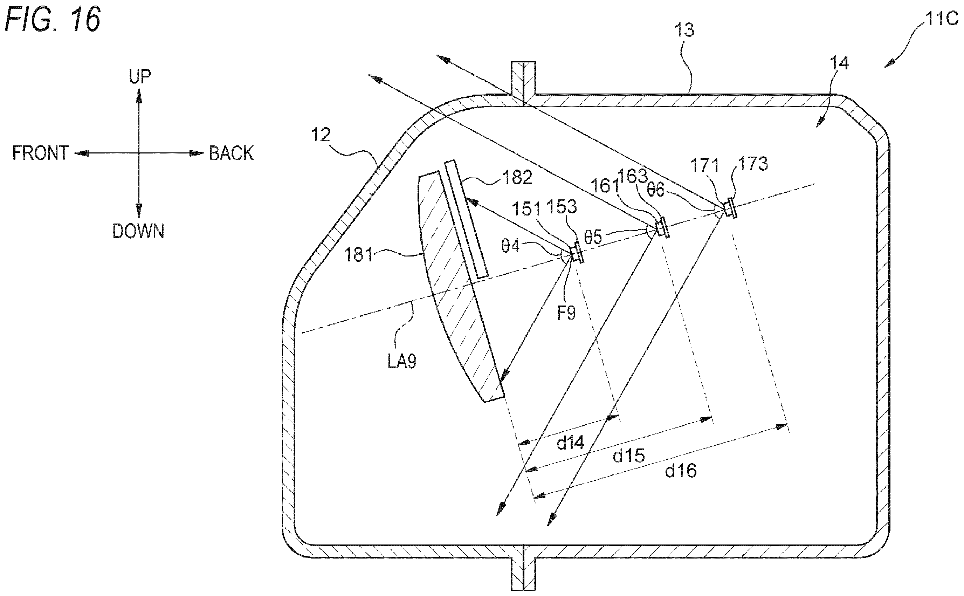

Next, a vehicle lamp 11C according to a sixth embodiment (the vehicle lamp 11C being an example of the road surface rendering device, and hereinafter, also referred to as a "lamp 11C") will be described below with reference to FIGS. 15 and 16. In a description of the sixth embodiment, the same reference numerals are given to portions overlapping with the descriptions of the third to fifth embodiments, and the description thereof will be appropriately omitted. The vehicle lamp 11C according to the sixth embodiment is different from the vehicle lamp 11 according to the third embodiment in that a single projection lens 181 is provided instead of the first projection lens 152, the second projection lens 162, and the third projection lens 172, and in that a light shielding plate 182 is provided. In FIG. 16, for convenience of description, the first light source 151, the second light source 161, and the third light source 171 arranged side by side on the same straight line (on an optical axis LA9) are illustrated, but these light sources may not be arranged side by side on the same straight line.

As illustrated in FIG. 16, an emission surface of the first light source 151 is disposed on a focal point F9 of the projection lens 181. The second light source 161 is disposed behind the first light source 151, and the third light source 171 is disposed behind the second light source 161. Therefore, a distance d14 from the first light source 151 to the projection lens 181 is shorter than a distance d15 from the second light source 161 to the projection lens 181 and a distance d16 from the third light source 171 to the projection lens 181. The distance d15 from the second light source 161 to the projection lens 181 is shorter than the distance d16 from the third light source 171 to the projection lens 181.

Light emitted from the first light source 151, the second light source 161, and the third light source 171 diffuses toward the projection lens 181. An angle θ4 at which light emitted from the first light source 151 diffuses is equal to an angle θ5 at which light emitted from the second light source 161 diffuses and an angle θ6 at which light emitted from the third light source 171 diffuses. Therefore, the longer the distance from each light source to the projection lens 181, the smaller the amount of light incident on the projection lens 181.

The light shielding plate 182 is a plate-shaped member having a substantially rectangular shape. A length of the light shielding plate 182 in an up and down direction is about half of a length of the projection lens 181 in the up and down direction. The light shielding plate 182 is disposed between the first light source 151 and the projection lens 181. The light shielding plate 182 shields light emitted from the first light source 151, the second light source 161, and the third light source 171 toward an upper side of the projection lens 181.

In the example illustrated in FIG. 16, among light emitted from the first light source 151, light emitted toward the light shielding plate 182 is shielded, but most of light that is not emitted toward the light shielding plate 182 is incident on the projection lens 181. However, a part of light emitted from the second light source 161 and light emitted from the third light source 171 is shielded by the light shielding plate 182, and thus only a part of light is incident on the projection lens 181. Apart of light emitted from the second light source 161 and light emitted from the third light source 171 is not incident on the projection lens 181 or the light shielding plate 182. Therefore, in the illustrated example, among light emitted from the first light source 151, a ratio of light incident on the projection lens 181 is about 50%. Among light emitted from the second light source 161, a ratio of light incident on the projection lens 181 is about 40%. Among light emitted from the third light source 171, a ratio of light incident on the projection lens 181 is about 25%. Accordingly, the ratio of light incident on the projection lens 181 among light emitted from the first light source 151 is larger than the ratios of light incident on the projection lens 181 among light emitted from the other light sources (the second light source 161 and the third light source 171). The ratio of light incident on the projection lens 181 among light emitted from the second light source 161 is larger than the ratio of light incident on the projection lens 181 among light emitted from the third light source 171.

A road surface rendering pattern rendered in a region far from the vehicle 1100 is more likely to be formed to be wider, and thus an illuminance tends to be smaller in the road surface rendering pattern rendered in the region far from the vehicle 1100. As an amount of light incident on the projection lens 181 is increased, an illuminance of a road surface illuminated with the light is increased. Therefore, the lamp 11C according to the present embodiment illuminates a region positioned far from the vehicle 1100 with light emitted from a light source close to the projection lens 181. That is, according to the lamp 11C, as illustrated in FIG. 15, light emitted from the first light source 151 is emitted to the farthest region R1011 (an example of a first region), light emitted from the second light source 161 is emitted to the intermediate region R1012 (an example of a second region), and light emitted from the third light source 171 is emitted to the nearest region R1013 (an example of the second region). The farthest region R1011 is illuminated with light from the first light source 151 closest to the projection lens 181, and thus the farthest region R1011 is brighter than the other regions (the intermediate region R1012 and the nearest region R1013).

According to the vehicle lamp 11C having the above configuration, the distance d14 between the first light source 151 and the projection lens 181 is shorter than the distance d15 between the second light source 161 and the projection lens 181 and the distance d16 between the third light source 171 and the projection lens 181. Therefore, an amount of light emitted to the farthest region R1011, which is likely to be dark, is larger than amounts of light emitted to the other regions (the intermediate region R1012 and the nearest region R1013). Therefore, the lamp 11C can brightly illuminate the farthest region R1011, and thus the road surface rendering patterns P11 and P12 having high visibility can be formed.

According to the vehicle lamp 11C having the above configuration, even when the first light source 151, the second light source 161, and the third light source 171 emit light having the same luminosity, the farthest region R1011 can be illuminated more brightly than the other regions (the intermediate region R1012 and the nearest region R1013). Therefore, the lamp 11C can form the road surface rendering patterns P11 and P12 that can be easily visually recognized without making a luminosity of light emitted from the first light source 151 to be larger than luminosities of light emitted from the other light sources (the second light source 161 and the third light source 171).

### Modification of Sixth Embodiment

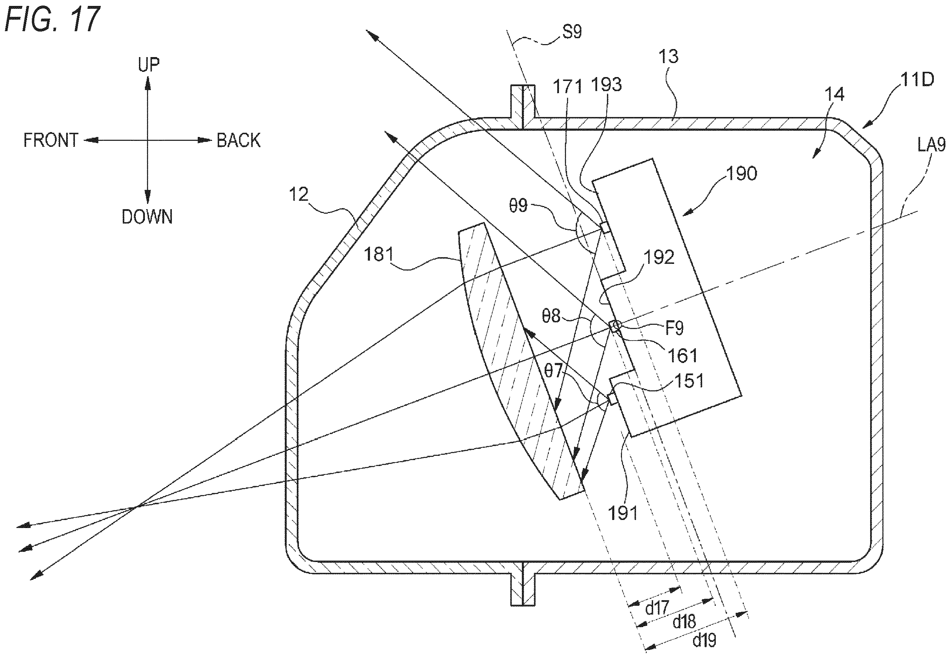

Next, a vehicle lamp 11D according to a modification of the sixth embodiment (the vehicle lamp 11D being an example of the road surface rendering device, and hereinafter, also referred to as a "lamp 11D") will be described below with reference to FIGS. 15 and 17. In a description of the present modification, the same reference numerals are given to portions overlapping with the descriptions of the third to sixth embodiments, and the description thereof will be appropriately omitted. The vehicle lamp 11D according to the present modification is different from the vehicle lamp 11C according to the sixth embodiment in that the light shielding plate 182 is not provided and in that a single substrate 190 is provided instead of the first substrate 153, the second substrate 163, and the third substrate 173.

The substrate 190 may be formed of the same resin material as the first substrate 153. The substrate 190 is formed in a stepped shape in an up and down direction of the lamp 11D. The substrate 190 includes a first surface 191, a second surface 192 positioned behind the first surface 191, and a third surface 193 positioned behind the second surface 192. The first surface 191, the second surface 192, and the third surface 193 are arranged in this order from a lower portion of the lamp 11D.

The first light source 151 is mounted on the first surface 191. The second light source 161 is mounted on the second surface 192. The third light source 171 is mounted on the third surface 193. Accordingly, the first light source 151 is disposed in front of the second light source 161 and the third light source 171, and the second light source 161 is disposed in front of the third light source 171. Therefore, a distance d17 from the first light source 151 to the projection lens 181 is shorter than a distance d18 from the second light source 161 to the projection lens 181 and a distance d19 from the third light source 171 to the projection lens 181. The distance d18 from the second light source 161 to the projection lens 181 is shorter than the distance d19 from the third light source 171 to the projection lens 181.

Light emitted from the first light source 151, the second light source 161, and the third light source 171 diffuses toward the projection lens 181. An angle θ7 at which light emitted from the first light source 151 diffuses is equal to an angle θ8 at which light emitted from the second light source 161 diffuses and an angle θ9 at which light emitted from the third light source 171 diffuses.

In the example illustrated in FIG. 17, most of light emitted from the first light source 151 is incident on the projection lens 181. However, a part of light emitted from the second light source 161 and light emitted from the third light source 171 is not incident on the projection lens 181 or hits the substrate 190, and thus only a part of light emitted from the second light source 161 and light emitted from the third light source 171 is incident on the projection lens 181. In the illustrated example, among light emitted from the second light source 161, a ratio of light incident on the projection lens 181 is about 80%. Among light emitted from the third light source 171, a ratio of light incident on the projection lens 181 is about 50%. Accordingly, the ratio of light incident on the projection lens 181 among light emitted from the first light source 151 is larger than the ratios of light incident on the projection lens 181 among light emitted from the other light sources (the second light source 161 and the third light source 171). The ratio of light incident on the projection lens 181 among light emitted from the second light source 161 is larger than the ratio of light incident on the projection lens 181 among light emitted from the third light source 171. Further, in the lamp 11D, as illustrated in FIG. 15, light emitted from the first light source 151 is emitted to the farthest region R1011 (an example of a first region), light emitted from the second light source 161 is emitted to the intermediate region R1012 (an example of a second region), and light emitted from the third light source 171 is emitted to the nearest region R1013 (an example of the second region). Therefore, the lamp 11D also achieves the same effect as the vehicle lamp 11C according to the sixth embodiment.

For example, when the second light source 161 is disposed on a surface S9 (see FIG. 17) that passes through the focal point F9 (see FIG. 17) of the projection lens 181 and is perpendicular to the optical axis LA9 (see FIG. 17) of the projection lens 181, an image formed by light emitted from the first light source 151 or the third light source 171 has a larger distortion than an image formed by light emitted from the second light source 161. Therefore, in the present modification, a light shielding plate provided with a predetermined opening portion may be disposed between each light source and the projection lens 181. In this case, the opening portion of the light shielding plate is preferably designed in consideration of the distortion.

The embodiments of the present disclosure have been described above, whereas it is needless to say that the technical scope of the present disclosure is not limited to the description of the present embodiment. The present embodiment is merely an example, and it is understood by a person skilled in the art that various modifications of the embodiment are possible within the scope of the disclosure described in the claims. The technical scope of the present disclosure is determined based on the scope of the disclosure described in the claims and the equivalent scope thereof.

In the first embodiment and the modification thereof, the first light source 51 and the second light source 61 are mounted on the single substrate 10, but the first light source 51 and the second light source 61 may be mounted on substrates having the same configuration as the substrate 10 and independent of each other.

In the first embodiment, the modification of the first embodiment, and the second embodiment, the control unit 9 is separated from the vehicle control unit, but the control unit 9 may be integrated with the vehicle control unit.

In the first embodiment and the modification thereof, the lamp 1 includes the first projection lens 7 and the second projection lens 8, but the lamp 1 may include a single projection lens instead of the first projection lens 7 and the second projection lens 8.

In the first embodiment and the modification thereof, the second illumination unit 6 blinks in a state in which the first illumination unit 5 is turned on, but the second illumination unit 6 may be turned on at all times.

In the first embodiment, the modification of the first embodiment, and the second embodiment, the road surface rendering patterns P1 and P2 are rendered by the lamp 1 projecting light onto the road surface, but the present disclosure is not limited thereto. For example, the road surface rendering patterns P1 and P2 may be rendered by projecting light onto the road surface by a road surface rendering device provided on infrastructure equipment such as a street light, a traffic light, and a sign light.

In the second embodiment, the lamp 1B includes the driving mirror 30 including the MEMS mirror, the DMD, or the blade mirror, but the present disclosure is not limited thereto. The lamp 1B may include a device (an example of the scanning unit) capable of partially changing the illuminances of the road surface rendering patterns P1 and P2, such as an LCD, an LCOS, or a µLED.

In the third to sixth embodiments and the modification of the sixth embodiment, the road surface rendering patterns P11 and P12 rendered on the road surface may be a sequential road surface rendering pattern. The sequential road surface rendering pattern continuously changes when the road surface is illuminated with the road surface rendering pattern with the elapse of time.

In the third to sixth embodiments and the modification example of the sixth embodiment, the number of light sources included in each of the vehicle lamps 11, 11A, 11B, 11C, and 11D is three (the first light source 151, the second light source 161, and the third light source 171), but may be two or four or more.

In the third to sixth embodiments and the modification of the sixth embodiment, in the road surface rendering patterns P11 and P12, a boundary line may or may not be displayed at a boundary of regions having different illuminances.

In the third to sixth embodiments and the modification of the sixth embodiment, the first light source 151, the second light source 161, and the third light source 171 emit light having the same luminosity, but may emit light having different luminosity.

In the third embodiment and the fourth embodiment, a configuration is described in which the road surface rendering patterns P11 and P12 that can be easily visually recognized are rendered by preventing a decrease in illuminance in a region far from the vehicle 1100 by the first light source 151, the second light source 161, and the third light source 171, but the present disclosure is not limited thereto. For example, the vehicle lamps 11 and 11A may render the road surface rendering patterns P11 and P12 with uniform brightness by adjusting the luminosities of light emitted from the first light source 151, the second light source 161, and the third light source 171. For example, the vehicle lamps 11 and 11A may increase the illuminances of the farthest region R1011, the intermediate region R1012, and the nearest region R1013 in this order by increasing the luminosities of light emitted from the first light source 151, the second light source 161, and the third light source 171 in this order. In this case, for example, the vehicle lamps 11 and 11A can render the sequential road surface rendering pattern by repeating turning on the third light source 171 first, turning on the second light source 161 second, turning on the first light source 151 third, and turning off all the light sources.

In the third to sixth embodiments and the modification of the sixth embodiment, the illumination control unit 18 is separated from the vehicle control unit, but the illumination control unit 18 may be integrated with the vehicle control unit.

In the fourth embodiment, the first light shielding plate 154, the second light shielding plate 164, and the third light shielding plate 174 are separate light shielding plates independent of each other, but may be integrally implemented as one light shielding plate.

In the fifth embodiment, the equivalent light emission area when light emitted from each light source is incident on the projection lens 180 is changed by changing the areas of the emission surface 1551 of the first light guide body 155, the emission surface 1651 of the second light guide body 165, and the emission surface 1751 of the third light guide body 175, but the present disclosure is not limited thereto. For example, the equivalent light emission area may be changed by changing the area of the emission surface of each light source.

The lamps 11, 11A, 11B, 11C, and 11D may further include an optical component such as a driving mirror. The driving mirror may include, for example, a micro electro mechanical systems (MEMS) mirror, a digital mirror device (DMD), or a blade mirror. For example, a road surface rendering pattern may be formed on a road surface by scanning with light emitted from a light source with the MEMS mirror.

In this case, the illumination control unit 18 may control the first light source 151, the second light source 161, the third light source 171, and the driving mirror to render the road surface rendering pattern P11 on the road surface around the vehicle 1100. The illumination control unit 18 includes a microcontroller and an analog drive control circuit. The microcontroller includes a processor such as a CPU and a memory such as a ROM. The analog drive control circuit includes a current control circuit for controlling a current to be supplied to the first light source 151, the second light source 161, and the third light source 171, and a mirror drive circuit for controlling the driving mirror. A placement position of the illumination control unit 18 is optional and is not particularly limited. For example, the illumination control unit 18 may be provided outside the lamp.

In the third to sixth embodiments and the modification of the sixth embodiment, the road surface rendering patterns P11 and P12 are rendered by the lamps 11, 11A, 11B, 11C, and 11D projecting light onto the road surface, but the present disclosure is not limited thereto. For example, the road surface rendering patterns P11 and P12 may be rendered by projecting light onto the road surface by a road surface rendering device provided on infrastructure equipment such as a street light, a traffic light, and a sign light.

The present application is based on Japanese Patent Application (Japanese Patent Application No. 2021-015771) filed on Feb. 3, 2021 and Japanese Patent Application (Japanese Patent Application No. 2021-015772) filed on Feb. 3, 2021, and the contents are incorporated herein by reference.

## Claims

1. A road surface rendering device for rendering a road surface by illuminating an illumination region extending along a direction away from the road surface rendering device with light, wherein
when the illumination region is divided into three regions of a left region, a central region, and a right region in a direction intersecting a longitudinal direction, an illuminance of the central region is largest.

2. The road surface rendering device according to claim 1, wherein
the illumination region is divided into a plurality of regions in the direction intersecting the longitudinal direction.

3. The road surface rendering device according to claim 1 or 2, comprising:
a first illumination unit configured to illuminate at least the left region and the right region with light;
a second illumination unit configured to illuminate the central region with light; and
a control unit configured to control turning-on of the first illumination unit and the second illumination unit, wherein
the control unit is configured to cause the second illumination unit to blink while turning on the first illumination unit.

4. The road surface rendering device according to any one of claims 1 to 3, comprising:
a first illumination unit configured to illuminate at least the left region and the right region with light;
a second illumination unit configured to illuminate the central region with light; and
a control unit configured to control turning-on of the first illumination unit and the second illumination unit, wherein
the control unit is configured to make an intensity of light emitted from the first illumination unit when the second illumination unit is turned on to be smaller than an intensity of light emitted from the first illumination unit when the second illumination unit is turned off.

5. The road surface rendering device according to any one of claims 1 to 4, comprising:
a first illumination unit configured to illuminate at least the left region and the right region with light; and
a second illumination unit configured to illuminate the central region with light, wherein
the first illumination unit includes a first light source, and a first light shielding portion configured to shield at least a part of light emitted from the first light source,
the second illumination unit includes a second light source, and a second light shielding portion configured to shield at least a part of light emitted from the second light source, and
an amount of light shielded by the first light shielding portion is smaller than an amount of light shielded by the second light shielding portion.

6. The road surface rendering device according to claim 1 or 2, comprising:
a light source; and
a scanning unit configured to illuminate the left region, the right region, and the central region with light emitted from the light source, wherein
the scanning unit is configured to perform scanning with the light in a manner that the illuminance of the central region is larger than an illuminance of the left region and an illuminance of the right region.

7. A road surface rendering device for rendering on a road surface by illuminating a rendering region extending along a distance from the road surface rendering device with light, the road surface rendering device comprising:
a first unit including a first light source, and a first projection lens configured to project light emitted from the first light source onto at least a part of the rendering region;
a second unit including a second light source, and a second projection lens configured to project light emitted from the second light source onto at least a part of the rendering region, wherein
the first unit and the second unit are configured to make an illumination range illuminated with light of the first light source to be narrower than an illumination range illuminated with light of the second light source, and
the first unit and the second unit are configured to make a farthest end portion of the illumination range of light from the second light source to overlap a farthest end portion of the illumination range of light from the first light source.

8. The road surface rendering device according to claim 7, wherein
a first separation distance of the first light source from a focal point of the first projection lens is shorter than a second separation distance of the second light source from a focal point of the second projection lens.

9. The road surface rendering device according to claim 7 or 8, wherein
the first unit includes a first light shielding portion configured to shield at least a part of light emitted from the first light source,
the second unit includes a second light shielding portion configured to shield at least a part of light emitted from the second light source, and
when the rendering region is divided into a plurality of divided regions in a perspective direction and a region that is farthest among the divided regions is referred to as a farthest region,
the first light shielding portion is configured to cause light emitted from the first light source to be emitted to only the farthest region, and
the second light shielding portion is configured to cause light emitted from the second light source to be emitted to the farthest region and at least one of the divided regions continuous from the farthest region.

10. The road surface rendering device according to claim 9, wherein
the first light shielding portion includes a first hole portion that allows light from the first light source to pass therethrough,
the second light shielding portion includes a second hole portion that allows from the second light source to pass therethrough, and
the second hole portion is larger than the first hole portion.

11. A road surface rendering device for forming a road surface rendering pattern to be rendered on a road surface, the road surface rendering device comprising:
a first light source unit including a first light source, and a first optical component configured to refract or reflect light emitted from the first light source;
a second light source unit including a second light source, and a second optical component configured to refract or reflect light emitted from the second light source; and
a projection lens configured to project light emitted from the first light source and transmitted through the first optical component and light emitted from the second light source and transmitted through the second optical component in front of the road surface rendering device to form the road surface rendering pattern, wherein
a first region illuminated by the first light source unit is positioned farther from the road surface rendering device than a second region illuminated by the second light source unit, and
the first optical component and the second optical component are configured to make an equivalent light emission area when light emitted from the first light source is incident on the projection lens to be smaller than an equivalent light emission area when light emitted from the second light source is incident on the projection lens.

12. A road surface rendering device for forming a road surface rendering pattern to be rendered on a road surface, the road surface rendering device comprising:
a first light source;
a second light source different from the first light source; and
a projection lens configured to project light emitted from the first light source and light emitted from the second light source in front of the road surface rendering device to form the road surface rendering pattern, wherein
a first region illuminated by the first light source is positioned farther from the road surface rendering device than a second region illuminated by the second light source, and
a distance between the first light source and the projection lens is shorter than a distance between the second light source and the projection lens.

13. The road surface rendering device according to claim 11 or 12, wherein
the second light source emits light having the same luminosity as the first light source.
